# NEUE EUROPÄISCHE PATENTSCHRIFT

(11) **EP 2 466 028 B3**
(45) Veröffentlichungstag und Bekanntmachung des Hinweises auf die Entscheidung über den Einspruch: **11.08.2021**
(45) Hinweis auf die Patenterteilung: 19.12.2012
(21) Anmeldenummer: 10195797.5
(22) Anmeldetag: 17.12.2010
(51) Int. Cl.: E04B 5/48

(54) **Bauelement mit Rohrleitungen und Verfahren zur Herstellung eines Bauelementes**
Construction element with tubes and method for manufacturing same
Composant avec des tuyeaux et procédé de fabrication d'un composant

(43) Veröffentlichungstag der Anmeldung: 20.06.2012
(73) Patentinhaber: Roth Werke GmbH, 35232 Dautphetal (DE); Gebr. Lotter KG, 71631 Ludwigsburg (DE)
(72) Erfinder:
(74) Vertreter: SONN Patentanwälte GmbH & Co KG

(56) Entgegenhaltungen:
- EP-A1- 2 213 808
- EP-A2- 1 207 354
- EP-A2- 1 619 005
- AT-B1- 502 685
- US-A- 4 037 375

## Beschreibung

Die Erfindung betrifft ein Bauelement, vorzugsweise ein flächiges Bauelement und insbesondere ein flächiges Deckenelement oder ein flächiges Wandelement, wobei das Bauelement zumindest eine flächige Schicht aus einer erhärteten Vergussmasse, insbesondere aus Beton aufweist und wobei zumindest ein Heizungsrohr und/oder Kühlrohr für die Durchleitung eines fluiden Mediums in die erhärtete Vergussmasse eingebettet ist. Die Erfindung betrifft fernerhin ein Verfahren zur Herstellung eines solchen Bauelementes. - Ein erfindungsgemäßes flächiges Bauelement dient insbesondere zum Heizen und/oder Kühlen von Räumen, großvolumigen Behältern und dergleichen und insbesondere zum Heizen und/oder Kühlen der Innenräume von Gebäuden. Bei dem durch das Heizungsrohr und/oder Kühlrohr geleiteten fluiden Medium handelt es sich vorzugsweise um Wasser oder um ein anderes wässriges Medium. Grundsätzlich können aber auch Gase als fluide Medien durch das zumindest eine Rohr geleitet werden. Nachfolgend wird im Übrigen für den Begriff Heizungsrohr und/oder Kühlrohr auch lediglich der Begriff Rohr verwendet.

Aus der Praxis sind flächige Bauelemente der eingangs genannten Art in verschiedenen Ausführungsformen bekannt. Bei diesen bekannten Bauelementen lässt häufig die Heiz- bzw. Kühlleistung zu wünschen übrig. Auch handelt es sich zumeist um aufwendig und kostspielig konstruierte Bauelemente. Aufgrund der vorgegebenen konstruktiven Verhältnisse sind Variationen insbesondere in Bezug auf die Bauelementabmessungen, den Verlegeabstand der Rohre, den Rohrdurchmesser, die höhenmäßige Anordnung der Rohre im Bauelement und dergleichen nicht ohne aufwendige Zusatzmaßnahmen möglich. Die Produktion der bekannten Bauelemente ist in der Regel in nachteilhafter Weise mit komplexen Produktionsabläufen verbunden.

Aus EP 2 213 808 A1 ist ein Bauelement der eingangs genannten Art bekannt. Hier wird ein Decken- oder Wandbauteil für Gebäude beschrieben, das mindestens eine Tragschicht aus Stahl- und/oder Spannbeton und mindestens eine Rohrleitung zum Zuführen eines Heiz- und/oder Kühlmediums umfasst. Ähnliche Bauteile bzw. Bauelemente sind auch aus US 4 037 375 und EP 1 619 005 A2 bekannt.

Der Erfindung liegt das technische Problem zugrunde, ein Bauelement der eingangs genannten Art anzugeben, das einfach und wenig aufwendig, insbesondere industriell herstellbar ist, das zudem variabel und flexibel an die konkreten Gegebenheiten anpassbar ist und das außerdem auch eine optimale Heiz- bzw. Kühlleistung gewährleistet. Der Erfindung liegt weiterhin das technische Problem zugrunde, ein Verfahren zur Herstellung eines solchen Bauelementes anzugeben.

Zur Lösung dieses technischen Problems lehrt die Erfindung ein Bauelement gemäß Anspruch 1.

Der Abstand a wird von der Unterseite der Rohre aus gemessen. - Die Dicke der Oberflächenschicht zwischen dem zumindest einen Rohr und der vorderseitigen Oberfläche wird also durch die Höhe des zumindest einen Abstandshalters bestimmt. Es liegt im Rahmen der Erfindung, dass im fertigen Bauelement die Aufnahmeschienen in die erhärtete Vergussmasse eingebettet sind. Es liegt weiterhin im Rahmen der Erfindung, dass der zumindest eine an eine Aufnahmeschiene angeschlossene Abstandshalter die Oberflächenschicht aus der erhärteten Vergussmasse durchsetzt.

Mit den erfindungsgemäßen Maßnahmen wird eine oberflächennahe Verlegung der Heiz- bzw. Kühlrohre im Bauelement realisiert, wobei ein relativ geringer Abstand eines Rohres zur vorderseitigen Oberfläche des Bauelementes funktionssicher und präzise eingestellt bzw. eingehalten werden kann und somit eine optimale Heiz- bzw. Kühlleistung erzielt werden kann. Nichtsdestoweniger kann ein erfindungsgemäßes Bauelement einfach, wenig aufwendig und kostengünstig gefertigt werden und es eignet sich vor allem für die industrielle Fertigung.

Es wurde bereits eingangs dargelegt, dass das erfindungsgemäße Bauelement bzw. flächige Bauelement zum Heizen und/oder zum Kühlen von Räumen, großvolumigen Behältern und dergleichen eingesetzt werden kann. Vorzugsweise wird das flächige Bauelement zum Heizen und/oder Kühlen der Innenräume eines Gebäudes eingesetzt. Bei dem flächigen Bauelement handelt es sich insbesondere um ein flächiges Deckenelement oder ein flächiges Wandelement, das bevorzugt zur Beheizung oder Kühlung der Innenflächen von Räumen eingesetzt wird. Besonders bevorzugt handelt es sich bei dem erfindungsgemäßen flächigen Bauelement um ein flächiges Deckenelement. Es liegt auch im Rahmen der Erfindung, dass das Bauelement bzw. das flächige Bauelement als Absorber, insbesondere als Solarabsorber eingesetzt werden kann und dass dann das fluide Medium in dem zumindest einen Rohr Energie bzw. Wärme von außen aufnehmen kann. Auch diese Einsatzmöglichkeit ist mit dem Begriff Kühlrohr umfasst. - Vorderseitige Oberfläche des Bauelementes meint im Rahmen der Erfindung im Übrigen die dem zu heizenden bzw. dem zu kühlenden Raum zugewandte Oberfläche des Bauelementes.

Nach einer bevorzugten Ausführungsform der Erfindung weist das erfindungsgemäße Bauelement bzw. flächige Bauelement eine rechteckige Fläche bzw. vorderseitige Oberfläche auf. Grundsätzlich sind aber auch andere geometrische Ausgestaltungen des Bauelementes möglich. Empfohlenermaßen beträgt die Fläche bzw. vorderseitige Oberfläche eines erfindungsgemäßen Bauelementes 4 bis 16 m2 und bevorzugt 5 bis 15 m2. Die Länge eines erfindungsgemäßen flächigen Bauelementes beträgt vorzugsweise 3 bis 9 m und bevorzugt 4 bis 8 m. Es empfiehlt sich, dass die Breite des flächigen Bauelementes 1 bis 5 m, bevorzugt 1,5 bis 4 m beträgt. - Die erfindungsgemäßen flächigen Bauelemente können als vorgefertigte Fertigelemente zum Montageort transportiert werden. Es ist aber auch möglich, dass die Bauelemente gleichsam in situ bzw. am Montageort hergestellt bzw. vergossen werden. - Bei der für das erfindungsgemäße Bauelement eingesetzten Vergussmasse handelt es sich zweckmäßigerweise um eine zementhaltige bzw. auf Zement basierende Vergussmasse, insbesondere um Beton.

Das zumindest eine in dem Bauelement vorgesehene Rohr ist nach bevorzugter Ausführungsform in Form eines Rohrregisters ausgebildet. Dabei weist das zumindest eine Rohr parallele bzw. im Wesentlichen parallele Rohrabschnitte auf und gebogene Rohrabschnitte, die die parallelen bzw. im Wesentlichen parallelen Rohrabschnitte miteinander verbinden. Bei den erfindungsgemäß eingesetzten Rohren handelt es sich empfohlenermaßen um Kunststoffrohre. Vorzugsweise haben die Rohre einen runden Querschnitt und insbesondere einen kreisförmigen Querschnitt. Grundsätzlich sind aber auch andere Querschnittsformen möglich. Der Außendurchmesser der Rohre beträgt zweckmäßigerweise 10 bis 25 mm und bevorzugt 12 bis 20 mm. Die Wandstärke der Rohre beträgt empfohlenermaßen 1 bis 3 mm. Mit Rohr ist im Rahmen der Erfindung grundsätzlich jeder Kanal gemeint, der sich für die Durchführung des fluiden Mediums eignet.

Es liegt im Rahmen der Erfindung, dass die Aufnahmeschienen bzw. linearen Aufnahmeschienen aus einem nichtmetallischen Werkstoff, insbesondere aus Kunststoff bzw. im Wesentlichen aus Kunststoff bestehen. Erfindungsgemäß wird eine Aufnahmeschiene einstückig durch Extrusion oder Spritzgießen erzeugt. Eine bevorzugte Ausführungsform ist dadurch gekennzeichnet, dass eine Aufnahmeschiene aus einer Mehrzahl von zusammengesteckten Schienenabschnitten bzw. linearen Schienenabschnitten besteht. Jeder Schienenabschnitt weist dann bevorzugt eine Mehrzahl von Rohraufnahmen auf. Die einzelnen Schienenabschnitte werden vorzugsweise einstückig durch Extrusion oder Spritzgießen hergestellt.

Separat verlegbare bzw. montierbare Aufnahmeschienen meint im Rahmen der Erfindung insbesondere, dass die Aufnahmeschienen bzw. die linearen Aufnahmeschienen grundsätzlich einzeln in den gewünschten Schienenabständen bei der Herstellung des Bauelementes verlegt werden können. Das schließt aber nicht aus, dass auch ein Aggregat aus einer Mehrzahl von Aufnahmeschienen und zumindest einem in den Rohraufnahmen der Auflageschienen aufgenommenen Rohr - das also die einzelnen Aufnahmeschienen miteinander verbindet - bei der Erzeugung des Bauelementes verlegt werden kann. Ausgeschlossen ist auch nicht die Verlegung eines weiter unten noch erläuterten Aggregates aus bereits miteinander verbundenen Auflageschienen und Abstandshalterschienen. Es liegt aber im Rahmen der Erfindung, dass die Aufnahmeschienen einzeln bzw. separat hergestellt werden, und es ist gemäß der Erfindung vorgesehen, dass die Aufnahmeschienen einzeln und separat verlegbar bzw. montierbar sind. Die Erfindung bezieht sich insbesondere nicht auf eine einstückige, Rohraufnahmen aufweisende Kunststoffmatte mit Längs- und Querstreben.

Dass das zumindest eine Rohr im Bereich der vorderseitigen Oberfläche des Bauelementes angeordnet ist, meint im Rahmen der Erfindung insbesondere, dass das Rohr in dem in Bezug auf die gesamte Dicke des Bauelementes vorderen Drittel, vorzugsweise im vorderen Viertel und besonders bevorzugt im vorderen Fünftel des Bauelementes angeordnet ist. Eine bevorzugte Ausführungsform der Erfindung ist dadurch gekennzeichnet, dass der Abstand a des zumindest einen Rohres von der vorderseitigen Oberfläche 3 bis 18 %, bevorzugt 5 bis 14 % und besonders bevorzugt 6 bis 12 % der Dicke D des Bauelementes beträgt. Dicke D meint dabei den Abstand der vorderseitigen Oberfläche von der rückseitigen Oberfläche des Bauelementes. Es empfiehlt sich, dass der Abstand a 5 bis 35 mm, bevorzugt 10 bis 28 mm und sehr bevorzugt 12 bis 25 mm beträgt. Die Höhe h eines Abstandshalters beträgt empfohlenermaßen 7 bis 23 mm, bevorzugt 9 bis 21 mm und besonders bevorzugt 11 bis 19 mm. Höhe h meint dabei die Erstreckung des Abstandshalters senkrecht zur vorderseitigen Oberfläche des Bauelementes, zweckmäßigerweise bis zur Unterkante bzw. Unterseite der zugeordneten Aufnahmeschiene. Zweckmäßigerweise beträgt die Dicke D des Bauelementes 120 bis 300 mm, vorzugsweise 140 bis 250 mm und bevorzugt 170 bis 230 mm.

Nach besonders bevorzugter Ausführungsform der Erfindung ergibt sich für das Verhältnis D/d • a ein Wert von 0,3 bis 1,7, bevorzugt 0,4 bis 1,5 und sehr bevorzugt 0,5 bis 1,3. d meint dabei den Außendurchmesser des zumindest einen Rohres, D meint die Dicke des Bauelementes und a meint den Abstand des zumindest einen Rohres von der vorderseitigen Oberfläche.

Eine empfohlene Ausführungsform der Erfindung ist dadurch gekennzeichnet, dass das Verhältnis (A/D) des Abstandes A der Oberseite bzw. der Oberkante der Aufnahmeschienen zur vorderseitigen Oberfläche des Bauelementes zur Dicke D des Bauelementes 0,1 bis 0,3, vorzugweise 0,12 bis 0,25 und bevorzugt 0,13 bis 0,21 beträgt. Erfindungsgemäß liegt zumindest ein Bewehrungselement an der Oberseite bzw. Oberkante der Aufnahmeschienen an. Bei dem Bewehrungselement bzw. bei den Bewehrungselementen kann es sich insbesondere um eine Bewehrungsmatte oder um Bewehrungsstäbe handeln. Das zumindest eine Bewehrungselement besteht vorzugsweise aus Metall bzw. im Wesentlichen aus Metall und besonders bevorzugt aus Stahl bzw. im Wesentlichen aus Stahl. - Hervorzuheben ist, dass den Aufnahmeschienen im Rahmen der Erfindung zweckmäßigerweise eine Doppelfunktion zukommt, in dem sie einerseits der Rohraufnahme bzw. Rohrfixierung dienen und andererseits eine Ablagefläche für zumindest ein Bewehrungselement zur Verfügung stellen. Die Aufnahmeschienen haben dann also auch die Funktion einer Höhenfixierung für die Bewehrung.

Vorzugsweise ist eine Rohraufnahme für die formschlüssige Aufnahme eines Rohres eingerichtet. Nach einer Ausführungsform der Erfindung wird ein Rohr in einer Rohraufnahme mittels einer Rastverbindung arretiert bzw. fixiert.

Erfindungsgemäß weist eine Aufnahmeschiene einen Basissteg und zumindest einen an den Basissteg angeschlossenen und quer zu dem Basissteg angeordneten Quersteg auf. Der zumindest eine Quersteg ist zweckmäßigerweise senkrecht bzw. im Wesentlichen senkrecht zum Basissteg angeordnet. Erfindungsgemäß ist in dem zumindest einen Quersteg eine Mehrzahl von Rohraufnahmen vorgesehen.

Eine besonders empfohlene Ausführungsform der Erfindung ist dadurch gekennzeichnet, dass eine Aufnahmeschiene im Querschnitt U-förmig ausgebildet ist, wobei zwei quer zu dem Basissteg angeordnete Querstege vorgesehen sind. Es liegt im Rahmen der Erfindung, dass die Rohraufnahmen in den beiden Querstegen vorgesehen sind. Zweckmäßigerweise sind die Querstege senkrecht bzw. im Wesentlichen senkrecht zum Basissteg angeordnet. Der Basissteg bildet die U-Basis und die beiden Querstege bilden die U-Schenkel der U-förmig ausgebildeten Aufnahmeschiene. Gemäß einer Ausführungsvariante ist die U-Basis einer Aufnahmeschiene zur vorderseitigen Oberfläche des Bauelementes hin orientiert. Zweckmäßigerweise ist in jedem Quersteg einer U-förmigen Aufnahmeschiene eine Mehrzahl von Rohraufnahmen vorgesehen. Zumindest für einen Teil bzw. für einen Großteil dieser Rohraufnahmen gilt, dass eine erste in dem einen Quersteg angeordnete Rohraufnahme mit einer zweiten in dem anderen Quersteg angeordneten Rohraufnahme fluchtet. Vorzugsweise ist ein in zwei einander zugeordnete fluchtende Rohraufnahmen eingelegtes Rohr quer und bevorzugt senkrecht bzw. im Wesentlichen senkrecht zur Längsrichtung bzw. Längsachse der Aufnahmeschiene angeordnet.

Eine sehr bevorzugte Ausführungsform der Erfindung zeichnet sich dadurch aus, dass eine Aufnahmeschiene eine Mehrzahl von an den Basissteg und/oder an die Querstege angeschlossenen Abstandshaltern aufweist. Wenn nach einer Ausführungsvariante der Basissteg zur vorderseitigen Oberfläche des Bauelementes hin orientiert ist, sind die Abstandshalter zweckmäßigerweise an der den Querstegen abgewandten Unterseite des Basissteges angeschlossen. Nach einer empfohlenen Ausführungsvariante ist an einer Aufnahmeschiene eine Mehrzahl von Abstandshaltern einstückig angeformt. Die Aufnahmeschienen mit den einstückig angeformten Abstandshaltern bestehen vorzugsweise aus Kunststoff und werden zweckmäßigerweise durch Extrusion oder Spritzgießen hergestellt. Die Abstandshalter können an dem Basissteg oder an dem zumindest einen Quersteg einer Aufnahmeschiene einstückig angeformt sein. Nach einer anderen bevorzugten Ausführungsform der Erfindung ist an einer Aufnahmeschiene eine Mehrzahl von Abstandshaltern über Rastverbindungen, insbesondere über lösbare Rastverbindungen angeschlossen. Zweckmäßigerweise sind diese Abstandshalter an dem Basissteg bzw. an der zur vorderseitigen Oberfläche hin orientierten Unterseite des Basissteges angeschlossen. Der Basissteg verfügt dazu bevorzugt über Rastöffnungen, in denen Rastelemente der Abstandshalter eingerastet werden können.

Vorzugsweise ist in einer Aufnahmeschiene, insbesondere in den Basissteg und/oder in dem zumindest einen Quersteg einer Aufnahmeschiene eine Mehrzahl von Durchbrüchen bzw. Öffnungen für die Vergussmasse eingebracht. Diese Durchbrüche bzw. Öffnungen ermöglichen ein besseres Fließen der eingebrachten noch nicht erhärteten Vergussmasse.

In besonders vorteilhafter Ausgestaltung der Erfindung ist vorgesehen, dass sich ein an einer Aufnahmeschiene angeschlossener Abstandshalter zur vorderseitigen Oberfläche des Bauelementes hin verjüngt. Zweckmäßigerweise verjüngt sich ein Abstandshalter mit der Maßgabe, dass er an der vorderseitigen Oberfläche des Bauelementes spitz zuläuft. Nach einer empfohlenen Ausführungsvariante hat ein Abstandshalter zumindest im Bereich der vorderseitigen Oberfläche des Bauelementes einen dreieckförmigen Querschnitt. Es liegt im Rahmen der Erfindung, dass an der vorderseitigen Oberfläche des Bauelementes lediglich kleine bzw. schmale punktförmige oder linienförmige Bereiche der Abstandshalter vorhanden bzw. sichtbar sind.

Eine sehr bevorzugte Ausführungsform der Erfindung ist dadurch gekennzeichnet, dass zumindest ein Teil der Abstandshalter, vorzugsweise alle Abstandshalter unterhalb der Rohraufnahmen an einer Aufnahmeschiene angeschlossen sind. Dadurch wird eine höhere Stabilität der Aufnahmeschiene bei der Montage eines Rohres gewährleistet und es wird insbesondere ein Durchbiegen bzw. Durchdrücken der Aufnahmeschiene verhindert.

Gegenstand der Erfindung ist auch ein Verfahren zur Herstellung eines Bauelementes gemäß Anspruch 13. Dieses Verfahren umfasst auch eine Ausführungsform, bei der das zumindest eine Rohr schon in die Aufnahmeschienen eingebracht ist und bei der das Aggregat aus dem zumindest einen Rohr und den Aufnahmeschienen auf dem Boden der Schalungseinrichtung aufgebracht wird.

Eine Ausführungsform des erfindungsgemäßen Verfahrens ist dadurch gekennzeichnet, dass zunächst (werksseitig) lediglich ein Teil der für das Bauelement erforderlichen Vergussmasse in die Schalungseinrichtung eingebracht wird und somit lediglich ein Teil der Dicke D des fertigen Bauelementes mit Vergussmasse verfüllt wird. Der Rest der Vergussmasse wird nach dieser Ausführungsform vor Ort bzw. am Montageort eingebracht bzw. aufgebracht. Zweckmäßigerweise wird zunächst (werksseitig) Vergussmasse mit der Maßgabe aufgebracht, dass die Aufnahmeschienen und das zumindest eine Rohr in die Vergussmasse eingebettet wird und dass das zumindest eine auf den Aufnahmeschienen aufliegende Bewehrungselement zumindest teilweise in die Vergussmasse eingebettet wird. Aufgrund dieser lediglich teilweisen Fertigstellung des Bauelementes hat man zunächst ein relativ leichtgewichtiges einfach zu handhabendes Basiselement, das später am Montageort mit der noch fehlenden Vergussmasse versehen wird. - Nach einer anderen Ausführungsform des erfindungsgemäßen Verfahrens kann aber auch die gesamte Vergussmasse oder der größte Teil der Vergussmasse werksseitig eingebracht bzw. aufgebracht werden.

Der Erfindung liegt die Erkenntnis zugrunde, dass ein erfindungsgemäßes Bauelement auf sehr einfache, wenig aufwendige und kostengünstige Weise herstellbar ist. Die Herstellung der erfindungsgemäßen Bauelemente lässt sich problemlos in die an sich üblichen Produktionsabläufe für Betonteile in Betonfertigteilwerken einbinden. Die Bauelemente eignen sich hervorragend für eine industrielle Fertigung. Die erfindungsgemäßen Bauelemente sind auf einfache Weise flexibel und variabel an gewünschte Bauelementabmessungen Rohrverlegeabstände, Rohrdurchmesser, sowie an die Höhenlage des zumindest einen Rohres und dergleichen anpassbar. In der vorderseitigen Oberfläche des Bauelementes sind nur kleine punktartige bzw. linienartige Endbereiche der Abstandshalter erkennbar, so dass sich hier ein Vorteil für Sichtbetonoberflächen von Bauelementen ergibt. Weiterhin ist hervorzuheben, dass sich die erfindungsgemäßen flächigen Bauelemente auch durch eine hervorragende Heizleistung und/oder Kühlleistung auszeichnen. Das wird vor allem auch durch die einfache und funktionssichere Einbringung der Rohre in oberflächennahe Bereiche des Bauelementes gewährleistet. Insgesamt zeichnet sich die Erfindung durch geringen Aufwand und durch geringe Kosten aus.

Nachfolgend wird die Erfindung anhand einer lediglich ein Ausführungsbeispiel darstellenden Zeichnung näher erläutert. Es zeigen in schematischer Darstellung:
- Fig.: einen Schnitt durch ein erfindungsgemäßes Bauelement,
- Fig. 2: eine perspektivische Ansicht einer Schalungseinrichtung mit eingebrachten Komponenten des erfindungsgemäßen Bauelementes,
- Fig. 3: eine perspektivische Ansicht einer Ausführungsform einer Aufnahmeschiene für das erfindungsgemäße Bauelement,
- Fig. 4a: einen Abstandshalter für eine Aufnahmeschiene gemäß Fig. 3 in einer ersten Ausführungsform,
- Fig. 4b: den Gegenstand nach Fig. 4a in einer zweiten Ausführungsform,
- Fig. 5: eine perspektivische Darstellung einer weiteren Ausführungsform einer Aufnahmeschiene,
- Fig. 6: eine perspektivische Darstellung einer anderen Ausführungsform von Aufnahmeschienen mit Abstandshaltern,
- Fig. 7: den Gegenstand gemäß Fig. 5 in einer zusätzlichen Ausführungsform,
- Fig. 8a: eine weitere Ausführungsvariante einer erfindungsgemäßen Aufnahmeschiene,
- Fig. 8b: eine Draufsicht auf den Gegenstand nach Fig. 8a,
- Fig. 9: den Gegenstand gemäß Fig. 8a mit einer zusätzlichen Komponente,
- Fig. 10a: eine perspektivische Ansicht einer weiteren Ausführungsform einer Aufnahmeschiene,
- Fig. 10b: einen Schnitt durch den Gegenstand nach Fig. 10a,
- Fig. 11: eine perspektivische Darstellung einer zusätzlichen Ausführungsform einer Aufnahmeschiene,
- Fig. 12a: den Gegenstand gemäß Fig. 11 in einer weiteren Ausführungsform,
- Fig. 12b: eine Draufsicht auf den Gegenstand nach Fig. 12a,
- Fig. 13: eine perspektivische Ansicht einer weiteren Ausführungsform einer Aufnahmeschiene und
- Fig. 14: eine perspektivische Darstellung einer zusätzlichen Ausführungsvariante einer Aufnahmeschiene.

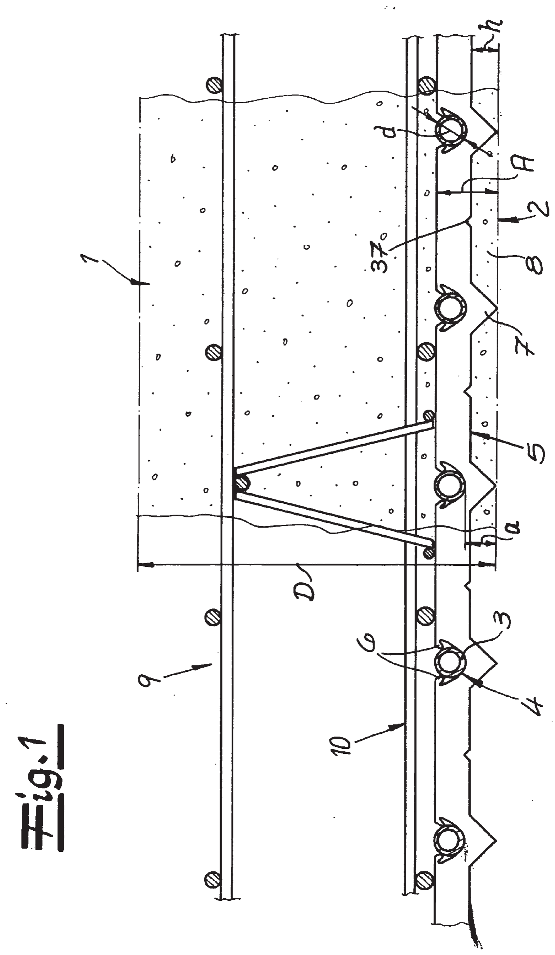

Fig. 1 zeigt ein erfindungsgemäßes flächiges Bauelement im Schnitt, das vorzugsweise als flächiges Deckenelement zur Auskleidung der Decke eines nicht näher dargestellten Raums dient. Das Bauelement besteht zum größten Teil aus einer erhärteten Vergussmasse, die vorzugsweise und im Ausführungsbeispiel aus Beton 1 besteht. Im Bereich der vorderseitigen Oberfläche 2 des Bauelementes ist ein als Heizungsrohr ausgebildetes Rohr 3 für die Durchleitung eines fluiden Heizmediums in den erhärteten Beton 1 eingebettet. Das Rohr 3 ist dabei in Rohraufnahmen 4 aufgenommen, die in einer Mehrzahl von linearen Aufnahmeschienen 5 vorgesehen sind. Nach einer bevorzugten Ausführungsform ist die in Fig. 1 dargestellte Aufnahmeschiene 5 im Querschnitt U-förmig ausgebildet. Verschiedene Ausführungsformen solcher U-förmig ausgebildeter Aufnahmeschienen 5 werden weiter unten erläutert. Es ist in Fig. 1 erkennbar, dass eine lineare Aufnahmeschiene 5 eine Mehrzahl von Rohraufnahmen 4 aufweist. Im Ausführungsbeispiel nach Fig. 1 ist das Rohr 3 mit Hilfe von Rastnasen 6 in den Rohraufnahmen 4 verrastet. An die Aufnahmeschiene 5 sind Abstandshalter 7 angeschlossen, die den Abstand a des Rohres 3 zu der vorderseitigen Oberfläche 2 des Bauelementes vorgeben. Der Abstand a wird dabei von der Unterseite des Rohres 3 ausgemessen. Die Abstandshalter 7 weisen eine Höhe h auf, wobei diese Höhe h senkrecht zu der vorderseitigen Oberfläche 2 als Abstand der vorderseitigen Oberfläche 2 von der Unterkante bzw. Unterseite der übrigen Aufnahmeschiene 5 gemessen wird. Zwischen dem Rohr 3 bzw. der Aufnahmeschiene 5 und der vorderseitigen Oberfläche 2 des Bauelementes ist eine relativ dünne Oberflächenschicht 8 aus dem erhärteten Beton 1 angeordnet. Die Abstandshalter 7 durchsetzen diese Oberflächenschicht 8. Vorzugsweise und im Ausführungsbeispiel verjüngen sich die Abstandshalter 7 zur vorderseitigen Oberfläche 2 hin, so dass an der vorderseitigen Oberfläche lediglich die Spitzen bzw. punktförmige oder linienförmige Endbereiche der Abstandshalter 7 sichtbar sind. In Fig. 1 ist weiter dargestellt, dass das erfindungsgemäße Bauelemente mit Bewehrungselementen 9 bewehrt ist. Ein gitterartig ausgebildetes Bewehrungselement 9, insbesondere ein als Bewehrungsmatte 10 ausgebildetes Bewehrungselement 9 liegt unmittelbar auf den Aufnahmeschienen 5 auf, und zwar in den Bereichen der Aufnahmeschiene 5 zwischen den Rohraufnahmen 4. In dem Schnitt von Fig. 1 ist lediglich eine Aufnahmeschiene 5 erkennbar. Es sind aber vorzugsweise mehrere Aufnahmeschienen 5 parallel zueinander angeordnet, die allesamt Rohraufnahmen 4 für das Rohr 3 aufweisen. Mit D ist in der Fig. 1 im Übrigen die gesamte Dicke des Bauelementes bezeichnet. Der Außendurchmesser des Rohres 3 wird mit d angegeben und mit A wird der Abstand der Oberseite bzw. Oberkante der Aufnahmeschiene 5 zur vorderseitigen Oberfläche 2 des Bauelementes bezeichnet. In der Fig. 1 ist weiterhin erkennbar, dass an der Unterseite der Aufnahmeschiene 5 dreieckförmige Aussparungen 37 vorgesehen sind, die an nicht dargestellte Fasen einer Schalungseinrichtung 11 angepasst sind.

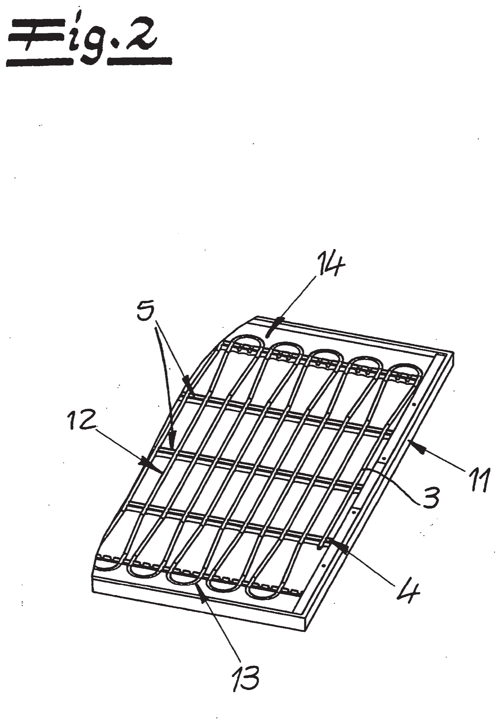

Die perspektivische Ansicht gemäß Fig. 2 zeigt eine Schalungseinrichtung 11 für die Herstellung eines erfindungsgemäßen Bauelementes. In diese Schalungseinrichtung 11 wurden Aufnahmeschienen 5 und in die Rohraufnahmen 4 der Aufnahmeschienen 5 wurde das Rohr 3 eingelegt bzw. eingerastet. Die Bewehrungselemente 9 und der Beton 1 sind in dem Zustand der Fig. 2 noch nicht aufgebracht bzw. eingebracht. Fig. 2 zeigt, dass das Rohr 3 vorzugsweise und im Ausführungsbeispiel in Form eines Rohrregisters angeordnet ist, das parallele Rohrabschnitte 12 und die parallelen Rohrabschnitte 12 verbindende gebogene Rohrabschnitte 13 aufweist. In Fig. 2 sind im Übrigen Umlenkhilfeeinrichtungen 14 für die gebogenen Rohrabschnitte 13 angedeutet, die aber nicht konkreter dargestellt sind.

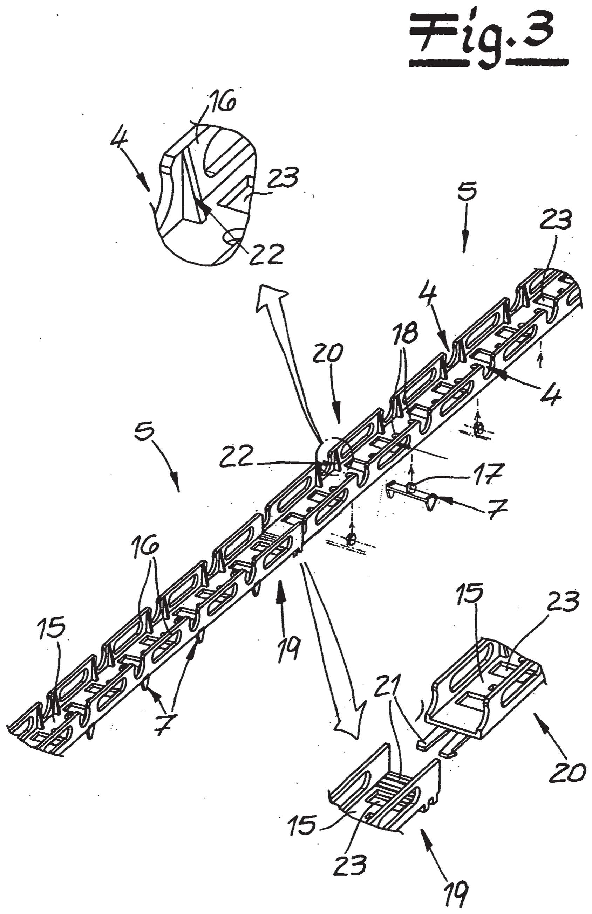

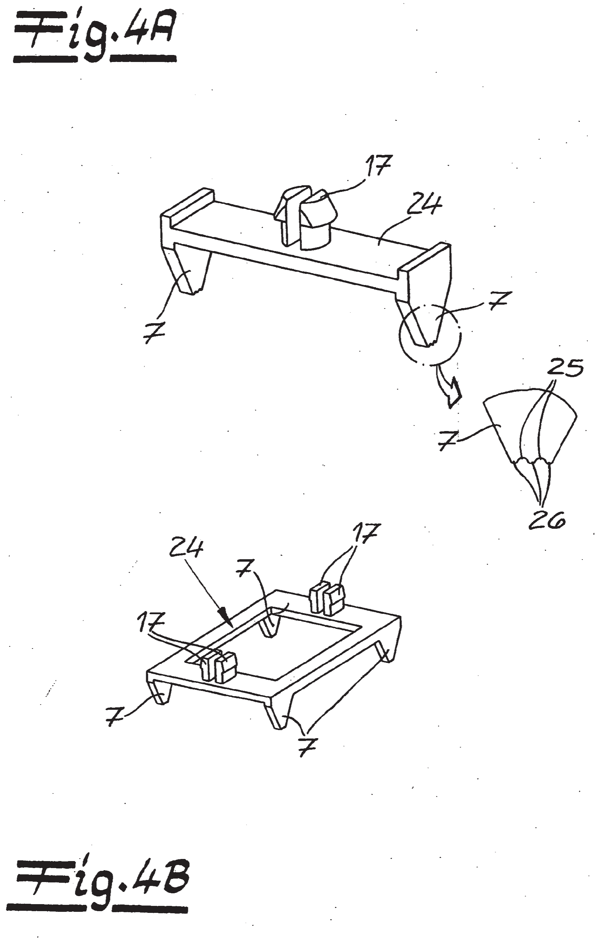

Die Fig. 3 zeigt eine erste Ausführungsform einer erfindungsgemäßen Aufnahmeschiene 5. Die Aufnahmeschiene 5 ist hier im Querschnitt U-förmig ausgebildet, wobei ein Basissteg 15 die U-Basis bildet und wobei zwei senkrecht zu dem Basissteg 15 angeordnete Querstege 16 die U-Schenkel bilden. Es ist erkennbar, dass Rohraufnahmen 4 in jedem Quersteg vorgesehen sind und dabei fluchtet jeweils eine Rohraufnahme 4 in dem einen Quersteg 16 mit einer Rohraufnahme 4 in dem anderen Quersteg 16, so dass ein eingelegtes Rohr 3 im Bereich der Rohraufnahmen 4 senkrecht zur Längsachse der Aufnahmeschiene 5 angeordnet ist. An der Unterseite des Basissteges 15 sind Abstandshalter 7 angeschlossen. Zwei Ausführungsformen für solche Abstandshalter 7 sind in den Fig. 4a und 4b dargestellt. Im Ausführungsbeispiel nach den Fig. 3, 4a und 4b sind die Abstandshalter 7 mit Rastelementen 17 verbunden. Diese Rastelemente 17 können in in dem Basissteg 15 vorhandenen Rastöffnungen 18 mit der Aufnahmeschiene 5 verrastet werden. Der bereits verrastete Zustand ist in dem unteren Schienenabschnitt 19 in Fig. 3 dargestellt. Die Aufnahmeschiene 5 ist im Ausführungsbeispiel nach Fig. 3 aus zwei Schienenabschnitten 19, 20 zusammengesetzt, die über Verbindungselemente 21 miteinander verbunden werden können. Es liegt auch im Rahmen der Erfindung, dass eine Aufnahmeschiene 5 aus mehr als zwei Schienenabschnitten 19, 20 zusammengesetzt sein kann. Dem oberen vergrößerten Ausschnitt der Fig. 3 ist im Übrigen entnehmbar, dass an die Querstege 16 im Bereich der Rohraufnahmen 4 Verstärkungsrippen 22 angeschlossen sind. Die Abschnitte der Querstege 16 zwischen den Rohraufnahmen 4 dienen zweckmäßigerweise der Auflage von Bewehrungselementen 9 bzw. der Auflage einer Bewehrungsmatte 10. Diese Abschnitte der Querstege 16 weisen im Ausführungsbeispiel wie auch der Basissteg 15 Durchbrüche 23 auf, die den Betonfluss begünstigen.

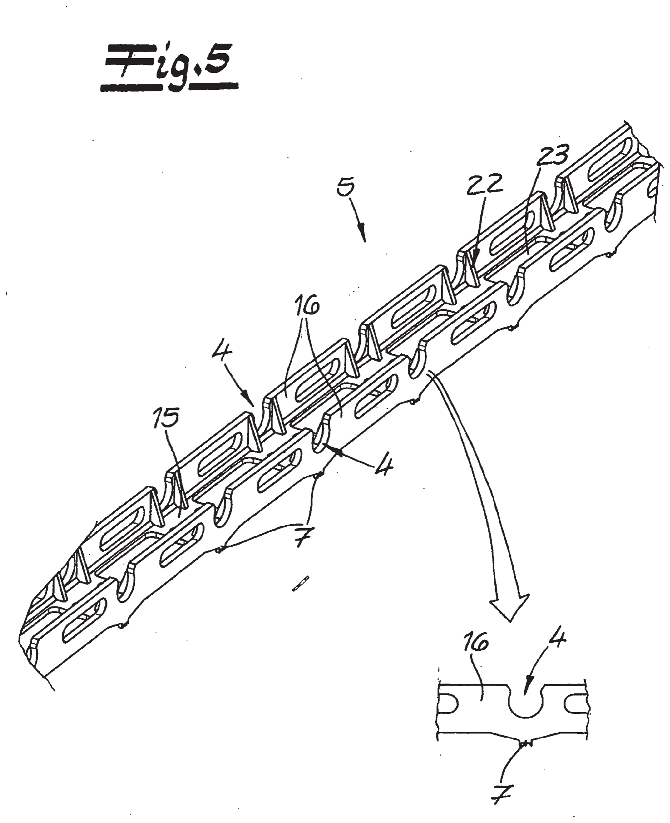

In den Fig. 4a und 4b ist gezeigt, dass die Abstandshalter 7 über Brückenelemente 24 miteinander verbunden sind, und auf diesen Brückenelementen 24 sind die Rastelemente 17 angeordnet. In diesen Figuren ist auch erkennbar, dass sich die Abstandshalter 7 vorzugsweise und im Ausführungsbeispiel nach unten hin verjüngen. Außerdem ist in dem vergrößerten Ausschnitt der Fig. 4a eine bevorzugte Ausführungsform dargestellt, bei der die Abstandshalter zweckmäßigerweise an ihrer Spitze bzw. an ihrem unteren Ende mit Ausnehmungen 25 versehen sind, so dass an der vorderseitigen Oberfläche 2 lediglich punktartige bzw. linienartige Endabschnitte 26 der Abstandshalter 7 sichtbar sind. In der Fig. 5 ist eine weitere Ausführungsform einer erfindungsgemäßen Aufnahmeschiene 5 dargestellt. Hier sind die Abstandshalter 7 einstückig an die Aufnahmeschiene 5 angeformt. Die Abstandshalter 7 sind dabei unterhalb der Rohraufnahmen 4 an den Querstegen 16 angeformt.

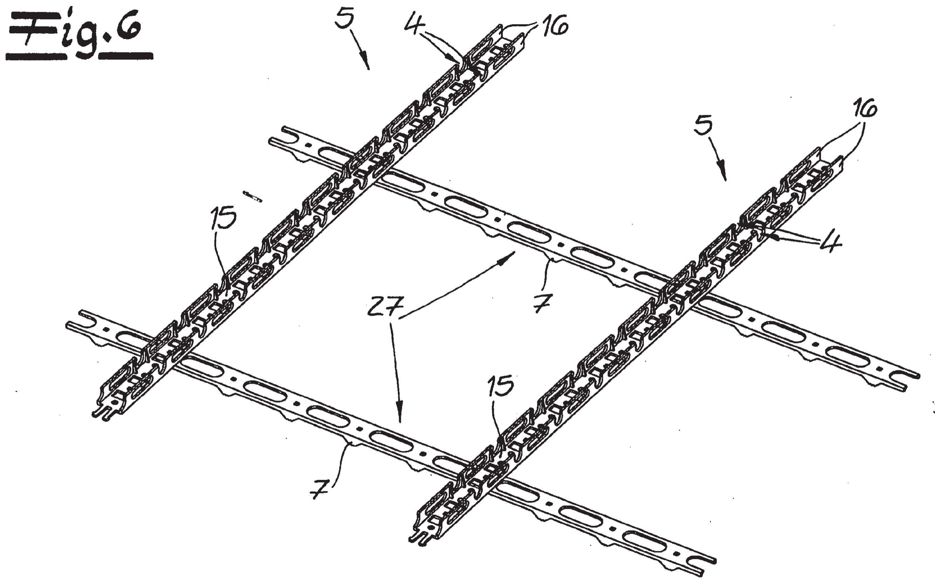

Eine weitere Ausführungsform der Erfindung zeigt die Fig. 6. Die Aufnahmeschienen 5 sind hier an sich wie im Ausführungsbeispiel der Fig. 3 ausgebildet. Die Abstandshalter 7 sind in diesem Fall aber an separaten Abstandshalterschienen 27 angeordnet bzw. einstückig angeformt. Die Abstandshalterschienen 27 werden unterhalb der Aufnahmeschienen 5 quer zu den Aufnahmeschienen 5 verlegt. Es liegt im Rahmen der Erfindung, dass die Abstandshalterschienen 27 in den Kreuzungsbereichen mit der Aufnahmeschiene 5 über nicht näher dargestellten Kupplungselemente verbunden sind.

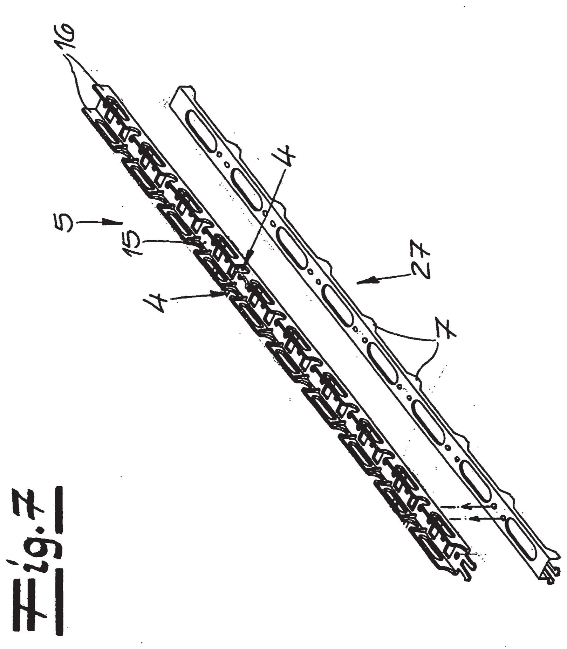

Die in der Fig. 7 dargestellte Ausführungsform ähnelt der Ausführungsform nach Fig. 6. Auch hier wird mit Abstandshalterschienen 27 gearbeitet. Die Abstandshalterschienen 27 sind in diesem Ausführungsbeispiel unterhalb der Aufnahmeschienen 5, und zwar parallel zu den Aufnahmeschienen 5 verlegt. Auch hier können die Aufnahmeschienen 5 durch nicht näher dargestellte Verbindungselemente mit den Abstandshalterschienen 27 verbunden sein.

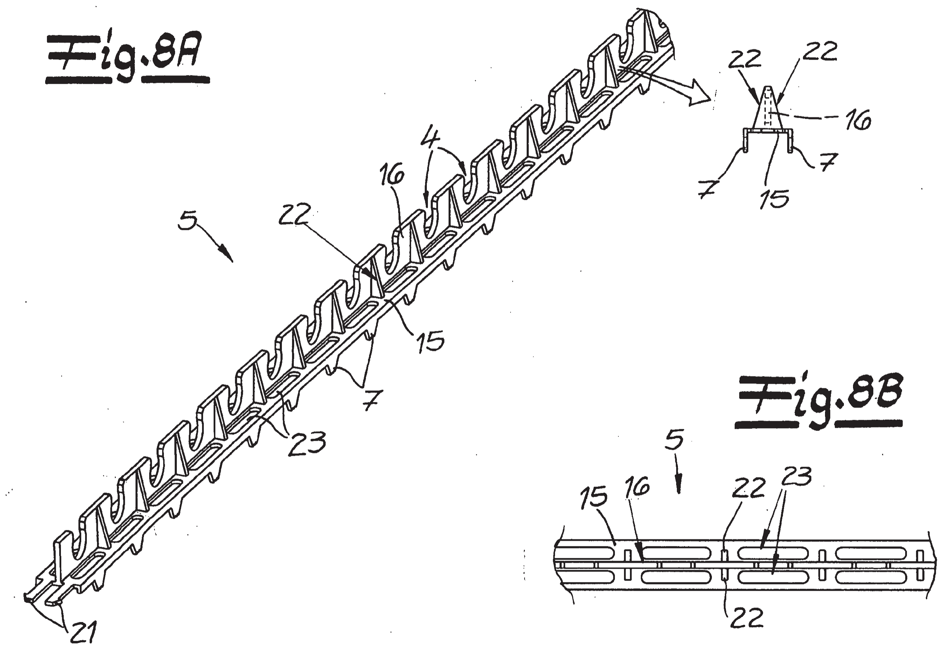

In den Fig. 8a und 8b ist eine andere Ausführungsform einer erfindungsgemäßen Aufnahmeschiene 5 gezeigt. Hier ist ein Basissteg 15 vorgesehen und zu diesem Basissteg 15 ist in diesem Fall nur ein einziger Quersteg 16 senkrecht angeordnet. In diesem Quersteg 16 sind die Rohraufnahmen 4 vorgesehen. An beiden Seiten des Basissteges 15 sind nach unten gerichtete Abstandshalter 7 einstückig angeformt. Auf beiden Seiten der Rohraufnahmen 4 sind Durchbrüche 23 für die Förderung des Betonflusses in dem Basissteg 15 vorhanden. Verstärkungsrippen 22 sind im Übrigen auf jeder Seite des Quersteges 16 angeschlossen.

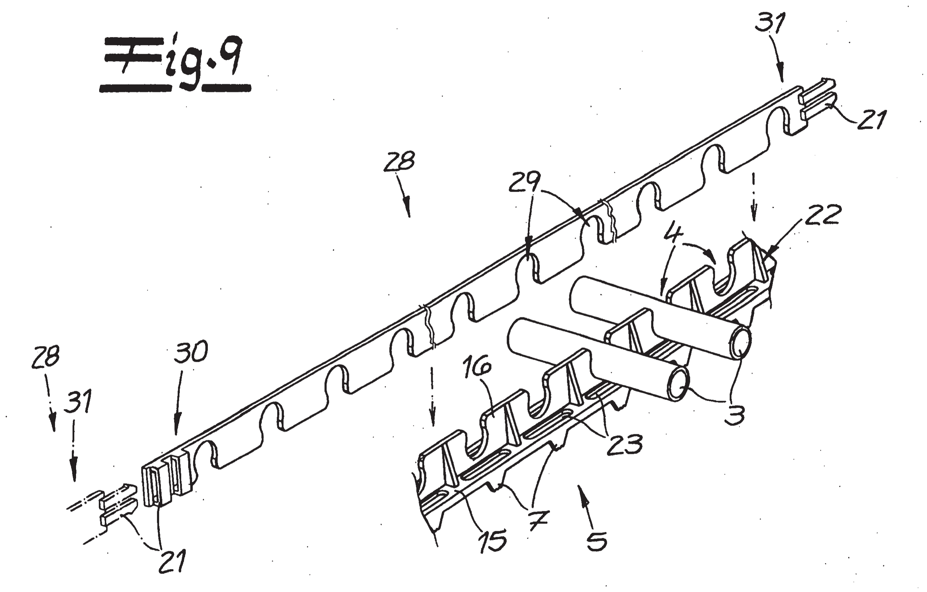

Fig. 9 zeigt eine Ausführungsform, bei der die Aufnahmeschiene 5 wie im Ausführungsbeispiel nach den Fig. 8a und 8b ausgestaltet ist. Hier werden die in den Rohraufnahmen 4 aufgenommenen Rohre 3 aber mit einem zusätzlichen Fixierungskamm 28 fixiert. Der Fixierungskamm 28 weist im Abstand der Rohraufnahmen 4 zueinander angeordnete Aufnahmeöffnungen 29 für die Rohre 3 auf. Der Fixierungskamm 28 wird dann über die in den Rohraufnahmen 4 aufgenommenen Rohre 3 gestülpt, so dass die Rohre 3 von oben von dem Fixierungskamm 28 umklammert werden. In der Fig. 9 ist außerdem dargestellt, dass auch der Fixierungskamm 28 zwei miteinander verbindbare Kammabschnitte 30, 31 aufweist, die über Verbindungselemente 21 miteinander verbindbar sind.

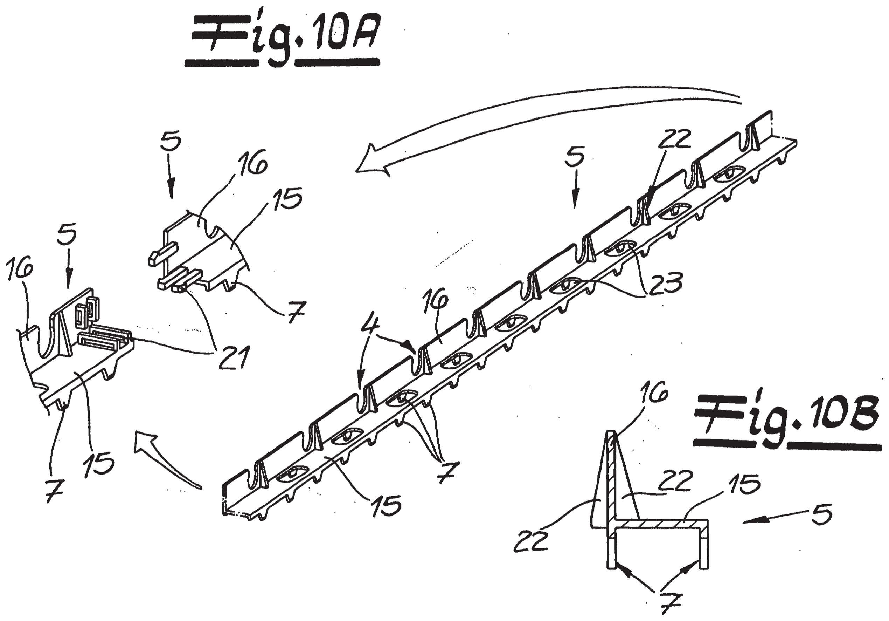

Die Fig. 10a und 10b zeigen eine ähnliche Aufnahmeschiene 5 wie die Fig. 8a und 8b. In der Fig. 10a, b ist jedoch der einzige Quersteg 16 im Gegensatz zur Ausführungsform nach den Fig. 8a und 8b nicht mittig auf dem Basissteg 15 angeordnet sondern an einer Seite des Basissteges 15. Die Fig. 10b zeigt, dass beidseitig des Quersteges 16 Verstärkungsrippen 22 an den Quersteg 16 angeschlossen sind.

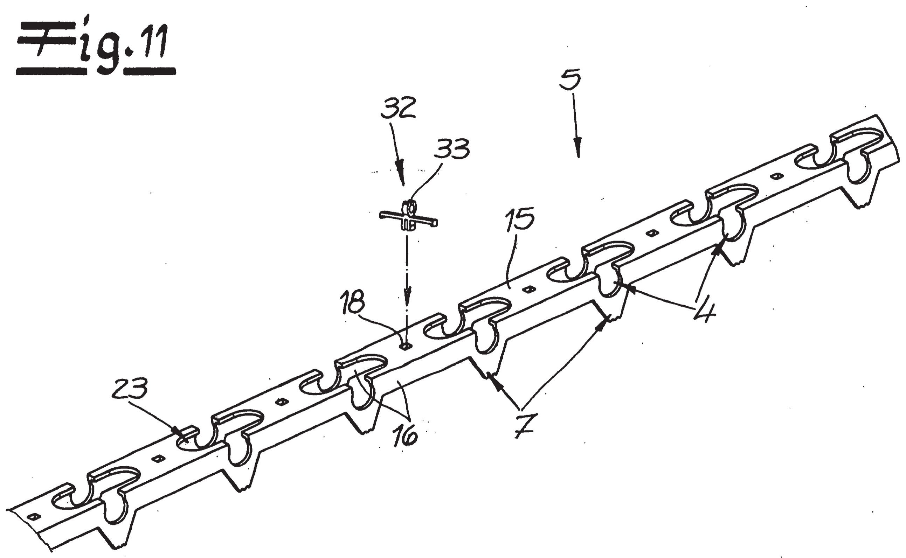

Eine weitere Ausführungsform einer erfindungsgemäßen Aufnahmeschiene 5 ist in der Fig. 11 dargestellt. Hier ist die Aufnahmeschiene 5 wiederum U-förmig ausgebildet. Allerdings ist hier der Basissteg 15 nach oben hin orientiert und die Abstandshalter 7 sind an den nach unten bzw. zur vorderseitigen Oberfläche 2 hin orientierten Querstegen 16 einstückig angeschlossen. Die Rohraufnahmen 4 sind wiederum in diesen Querstegen 16 vorgesehen. Fig. 11 zeigt im Übrigen ein Anschlusselement 32, das in einer Rastöffnung 18 des Basissteges 15 verrastbar ist und mit einem Klammerelement 33 an einem nicht dargestellten Bewehrungsstab anschließbar ist.

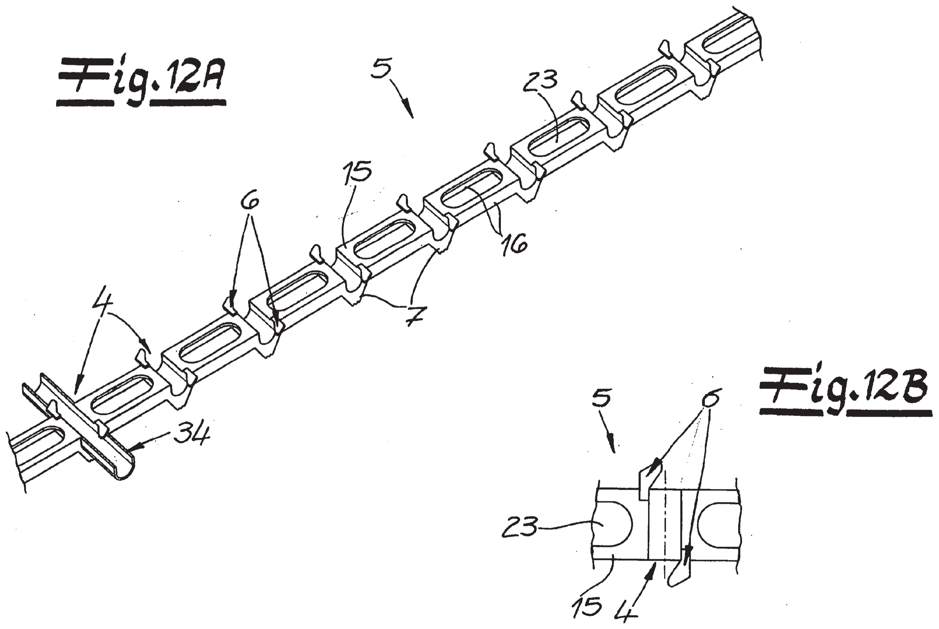

Die in den Fig. 12a und 12b dargestellte Ausführungsform für eine erfindungsgemäße Aufnahmeschiene ähnelt der Ausführungsform nach Fig. 11. Allerdings sind im Ausführungsbeispiel gemäß Fig. 12a und 12b an den Rohraufnahmen 4 zusätzliche Rastnasen 6 vorgesehen. Die Rastnasen 6 sind diagonal versetzt zueinander angeordnet (Fig. 12b) und ermöglichen ein funktionssicheres Verrasten des Rohres 3 in den Rohraufnahmen 4. In der Fig. 12a ist weiterhin dargestellt, dass zusätzlich halbschalenförmige Rohrauflageelemente 34 in die Rohraufnahmen 4 eingelegt werden können. Mit Hilfe dieser Rohrauflageelemente 34 wird das in den Rohraufnahmen 4 aufgenommene Rohr 3 zusätzlich insbesondere gegenüber Belastungen, beispielsweise durch schwere Bewehrungselemente 9 geschützt.

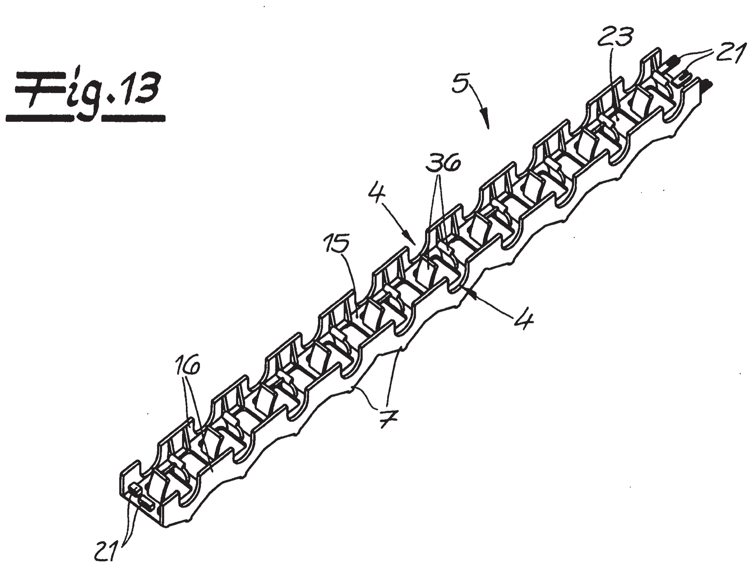

In Fig. 13 ist eine weitere Ausführungsform einer Aufnahmeschiene 5 dargestellt. Diese Aufnahmeschiene 5 wird vorzugsweise durch Spritzgießen hergestellt. Zwischen zwei fluchtenden Rohraufnahmen 4 sind hier jeweils zwei Rohrklammern 36 zur zusätzlichen Fixierung eines Rohres 3 angeordnet. Damit auf der Aufnahmeschiene 5 aufliegende - in Fig. 13 nicht dargestellte - Bewehrungselemente 9 nicht in nicht belegte Rohraufnahmen 4 rutschen, kann zwischen zwei Rohrklammern 36 optional ein nicht dargestellter Quersteg vorgesehen sein, der jedoch im Bedarfsfall auch leicht wieder entfernt werden kann, so dass die betreffende Rohraufnahme 4 für ein Rohr 3 zur Verfügung steht.

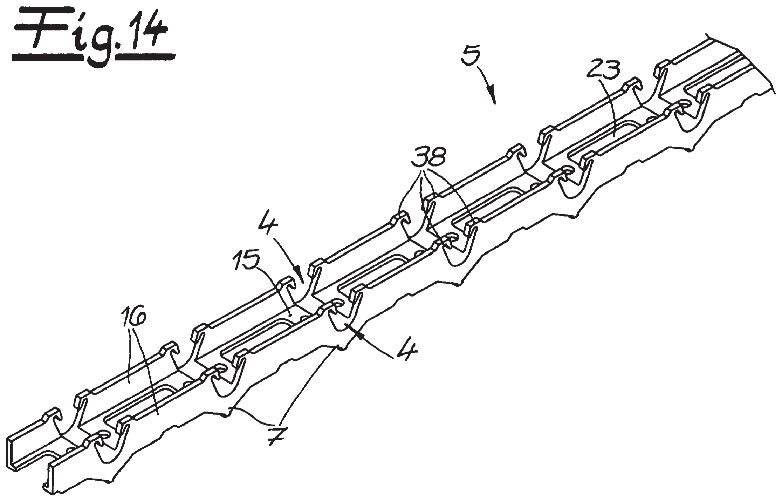

Bei der Ausführungsvariante nach Fig. 14 sind seitlich der Rohraufnahmen 4 aus der Oberseite der Aufnahmeschiene 5 vorkragende Sicherungselemente 38 mit von den Rohraufnahmen 4 wegweisenden Schrägen vorgesehen. Mit Hilfe dieser Sicherungselemente 38 wird gewährleistet, dass auf der Aufnahmeschiene 5 aufliegende Bewehrungselemente 9 nicht in die Rohraufnahmen 4 rutschen können.

## Patentansprüche

1. Bauelement, vorzugsweise flächiges Bauelement, insbesondere flächiges Deckenelement oder Wandelement, wobei das Bauelement zumindest eine flächige Schicht aus einer erhärteten Vergussmasse, insbesondere aus Beton (1) aufweist,
wobei im Bereich der vorderseitigen Oberfläche (2) des Bauelementes zumindest ein Heizungsrohr und/oder Kühlrohr für die Durchleitung eines fluiden Mediums in die erhärtete Vergussmasse eingebettet ist, wobei das zumindest eine Rohr (3) in Rohraufnahmen (4) aufgenommen ist, die in einer Mehrzahl von einzeln und separat verlegbaren Aufnahmeschienen, insbesondere linearen Aufnahmeschienen (5) vorgesehen sind,
wobei eine Aufnahmeschiene (5) eine Mehrzahl solcher Rohraufnahmen (4) aufweist, wobei an eine Aufnahmeschiene (5) zumindest ein Abstandshalter (7) angeschlossen ist, der den Abstand a des zumindest einen Rohres (3) zu der vorderseitigen Oberfläche (2) des Bauelementes vorgibt und wobei zwischen dem zumindest einen Rohr (3) und der vorderseitigen Oberfläche (2) eine Oberflächenschicht (8) aus der erhärteten Vergussmasse angeordnet ist
und wobei eine Aufnahmeschiene (5) einen Basissteg (15) und zumindest einen an den Basissteg (15) angeschlossenen und quer zum Basissteg (15) angeordneten Quersteg (16) aufweist und wobei eine Mehrzahl von Rohraufnahmen (4) in dem zumindest einen Quersteg (16) vorgesehen ist, wobei die Aufnahmeschiene (5) lediglich Rohraufnahmen (4) aufweist, welche zur Rückseite des Bauelementes hin für die Einführung von Rohren (3) offen ausgebildet sind, wobei die Aufnahmeschiene (5) einstückig ausgebildet ist,
**dadurch gekennzeichnet, dass**
zumindest ein Bewehrungselement (9) an der Oberseite bzw. Oberkante der Aufnahmeschienen (5) anliegt.

2. Bauelement nach Anspruch 1, wobei der Abstand a des zumindest einen Rohres (3) von der vorderseitigen Oberfläche (2) 3 bis 18 %, bevorzugt 5 bis 14 % und besonders bevorzugt 6 bis 12 % der Dicke D des Bauelementes beträgt.

3. Bauelement nach einem der Ansprüche 1 oder 2, wobei das Verhältnis D/d • a (d: Außendurchmesser des Rohres) 0,3 bis 1,7, bevorzugt 0,4 bis 1,5 und sehr bevorzugt 0,5 bis 1,3 beträgt.

4. Bauelement nach einem der Ansprüche 1 bis 3, wobei das Verhältnis (A/D) des Abstandes A der Oberseite bzw. Oberkante der Aufnahmeschienen (5) zur vorderseitigen Oberfläche (2) des Bauelementes zur Dicke D des Bauelementes 0,1 bis 0,3, bevorzugt 0,12 bis 0,25 und besonders bevorzugt 0,13 bis 0,21 beträgt.

5. Bauelement nach einem der Ansprüche 1 bis 4, wobei eine in einer Aufnahmeschiene (5) vorgesehene Rohraufnahme (4) zu einer Seite hin für die Einführung eines Rohres (3) offen ausgebildet ist und wobei eine Rohraufnahme (4) für die formschlüssige Aufnahme eines Rohres (3) eingerichtet ist.

6. Bauelement nach einem der Ansprüche 1 bis 5, wobei eine Aufnahmeschiene (5) im Querschnitt U-förmig ausgebildet ist, wobei zwei quer zu dem Basissteg (15) angeordnete Querstege (16) vorgesehen sind und wobei die Rohraufnahmen (4) in den beiden Querstegen (16) vorgesehen sind.

7. Bauelement nach einem der Ansprüche 1 bis 6, wobei eine Aufnahmeschiene (5) eine Mehrzahl von an den Basissteg (15) und/oder an die Querstege (16) angeschlossenen Abstandshaltern (7) aufweist.

8. Bauelement nach einem der Ansprüche 1 bis 7, wobei an einer Aufnahmeschiene (5) eine Mehrzahl von Abstandshaltern (7) einstückig angeformt ist.

9. Bauelement nach einem der Ansprüche 1 bis 8, wobei an einer Aufnahmeschiene (5) eine Mehrzahl von Abstandshaltern (7) über Rastverbindungen, insbesondere über lösbare Rastverbindungen angeschlossen ist.

10. Bauelement nach einem der Ansprüche 1 bis 9, wobei sich ein Abstandshalter (7) zur vorderseitigen Oberfläche (2) des Bauelementes hin verjüngt, insbesondere zur vorderseitigen Oberfläche (2) hin spitz zuläuft.

11. Bauelement nach einem der Ansprüche 1 bis 10, wobei zumindest ein Teil der Abstandshalter (7) unterhalb der Rohraufnahmen (4) an eine Aufnahmeschiene angeschlossen sind.

12. Bauelement nach einem der Ansprüche 1 bis 11, wobei in eine Aufnahmeschiene (5) insbesondere in den Basissteg (15) und/oder in den zumindest einen Quersteg (16) eine Aufnahmeschiene (5) eine Mehrzahl von Durchbrüchen (23) für die Vergussmasse eingebracht ist.

13. Verfahren zur Herstellung eines Bauelementes insbesondere nach einem der Ansprüche 1 bis 12, wobei eine Mehrzahl von einzeln und separat verlegbaren Aufnahmeschienen (5) mit Rohraufnahmen (4) auf den Boden einer Schalungseinrichtung (11) aufgebracht wird, so dass an den Aufnahmeschienen (5) angeschlossene Abstandshalter (7) auf dem Boden aufliegen,
wobei die Aufnahmeschienen (5) jeweils einen Basissteg (15) und zumindest einen an den Basissteg (15) angeschlossenen und quer zum Basissteg (15) angeordneten Quersteg (16) aufweisen und wobei eine Mehrzahl von Rohraufnahmen (4) in dem zumindest einen Quersteg (16) vorgesehen ist, wobei die Aufnahmeschiene (5) einstückig ausgebildet ist,
wobei in die Rohraufnahmen (4) der Aufnahmeschienen (5) zumindest ein Heizungsrohr und/oder Kühlrohr eingebracht wird, wobei zumindest ein Bewehrungselement oberhalb der Aufnahmeschienen (5) angeordnet wird und wobei Vergussmasse in die Schalungseinrichtung (11) eingebracht wird, so dass zumindest die Aufnahmeschienen (5) und das zumindest eine Rohr (3) zumindest über einen Teil ihrer Höhe in die Vergussmasse eingebettet sind, wobei die Aufnahmeschiene (5) lediglich Rohraufnahmen (4) aufweist, welche zur Rückseite des Bauelementes hin für die Einführung von Rohren (3) offen ausgebildet sind,
**dadurch gekennzeichnet, dass**
zumindest ein Bewehrungselement (9) an der Oberseite bzw. Oberkante der Aufnahmeschienen (5) anliegt.

## Claims

1. A construction element, preferably a flat construction element, in particular a flat ceiling element or wall element, wherein the construction element has at least one flat layer consisting of a hardened cast mass, in particular concrete (1),
wherein at least one heating pipe and/or cooling pipe for conducting a fluid medium is embedded in the hardened cast mass in the region of the front surface (2) of the construction element, wherein the at least one pipe (3) is accommodated in pipe holders (4), which are provided in a plurality of individually and separately layable holder rails, in particular linear holder rails (5),
wherein a holder rail (5) has a plurality of such pipe holders (4), wherein at least one spacer (7) is attached to a holder rail (5), which spacer predefines the distance a of the at least one pipe (3) from the front surface (2) of the construction element and wherein a surface layer (8) consisting of the hardened cast mass is arranged between the at least one pipe (3) and the front surface (2),
and wherein a holder rail (5) has a base web (15) and at least one transverse web (16), which is attached to the base web (15) and is arranged transversely to the base web (15), and wherein a plurality of pipe holders (4) is provided in the at least one transverse web (16), wherein the holder rail (5) only has pipe holders (4) which are open towards the rear side of the construction element for the introduction of pipes (3), the holder rail (5) being formed in one piece,
**characterised in that**
at least one reinforcement element (9) bears against the upper side or upper edge of the holder rails (5).

2. The construction element according to Claim 1, wherein the distance a of the at least one pipe (3) from the front surface (2) is 3 to 18%, preferably 5 to 14% and particularly preferably 6 to 12% of the thickness D of the construction element.

3. The construction element according to one of Claims 1 or 2, wherein the ratio D/d · a (d: outer diameter of the pipe) is 0.3 to 1.7, preferably 0.4 to 1.5 and very preferably 0.5 to 1.3.

4. The construction element according to one of Claims 1 to 3, wherein the ratio (A/D) of the distance A of the upper side or upper edge of the holder rails (5) from the front surface (2) of the construction element to the thickness D of the construction element is 0.1 to 0.3, preferably 0.12 to 0.25 and particularly preferably 0.13 to 0.21.

5. The construction element according to one of Claims 1 to 4, wherein a pipe holder (4) which is provided in a holder rail (5) is open towards one side for the introduction of a pipe (3) and wherein a pipe holder (4) is designed for accommodating a pipe (3) in a form-fitting manner.

6. The construction element according to one of Claims 1 to 5, wherein a holder rail (5) has a U-shaped cross section, wherein two transverse webs (16), which are arranged transversely to the base web (15), are provided and wherein the pipe holders (4) are provided in the two transverse webs (16).

7. The construction element according to one of Claims 1 to 6, wherein a holder rail (5) has a plurality of spacers (7) which are attached to the base web (15) and/or to the transverse webs (16).

8. The construction element according to one of Claims 1 to 7, wherein a plurality of spacers (7) is integrally formed on a holder rail (5).

9. The construction element according to one of Claims 1 to 8, wherein a plurality of spacers (7) is attached to a holder rail (5) by means of latch connections, in particular by means of detachable latch connections.

10. The construction element according to one of Claims 1 to 9, wherein a spacer (7) tapers towards the front surface (2) of the construction element, in particular runs to a point towards the front surface (2).

11. The construction element according to one of Claims 1 to 10, wherein at least some of the spacers (7) are attached to a holder rail beneath the pipe holders (4).

12. The construction element according to one of Claims 1 to 11, wherein a plurality of holes (23) for the cast mass is introduced into a holder rail (5), in particular into the base web (15) and/or into the at least one transverse web (16) of a holder rail (5).

13. Method for producing a construction element in particular according to one of Claims 1 to 12, wherein a plurality of individually and separately layable holder rails (5) with pipe holders (4) is applied to the bottom of a formwork device (11), so that spacers (7) attached to the holder rails (5) lie on the bottom,
wherein the holder rails (5) each have a base web (15) and at least one transverse web (16), which is attached to the base web (15) and is arranged transversely to the base web (15), and wherein a plurality of pipe holders (4) is provided in the at least one transverse web (16), the holder rail (5) being formed in one piece,
wherein at least one heating pipe and/or cooling pipe is introduced into the pipe holders (4) of the holder rails (5), wherein at least one reinforcement element is arranged above the holder rails (5), and wherein cast mass is introduced into the formwork device (11), so that at least the holder rails (5) and the at least one pipe (3) are embedded in the cast mass at least over some of their height, wherein the holder rail (5) only has pipe holders (4) which are open towards the rear side of the construction element for the introduction of pipes (3),
**characterised in that**
at least one reinforcement element (9) bears against the upper side or upper edge of the holder rails (5).

## Revendications

1. Élément de construction, de préférence un élément de construction plat, en particulier un élément de plafond plat ou un élément de paroi plat, l'élément de construction comportant au moins une couche plate constituée à partir d'une masse de scellement durcie, en particulier de béton (1),
dans lequel, au moins un conduit de chauffage et/ou un conduit de refroidissement est enrobé dans la région de la surface avant (2) de l'élément de construction, pour le passage d'un fluide dans la masse de scellement durcie, dans lequel l'au moins un conduit (3) est accueilli dans des admissions de conduit (4) prévues dans une pluralité de rails d'admission pouvant être posés individuellement et séparément, en particulier dans des rails d'admission linéaires (5),
dans lequel un rail d'admission (5) comporte une pluralité de ces admissions de conduit (4), dans lequel au moins un espaceur (7) est rattaché à un rail d'admission (5), définissant l'espacement a entre l'au moins un conduit (3) et la surface avant (2) de l'élément de construction, et dans lequel une couche de surface (8) constituée de la masse de scellement durcie est agencée entre l'au moins un conduit (3) et la surface avant (2),
et dans lequel un rail d'admission (5) comporte une âme de base (15) et au moins une âme transversale (16) connectée à l'âme de base (15) et agencée transversalement à l'âme de base (15), et dans lequel une pluralité d'admissions de conduit (4) est prévue dans l'au moins une âme transversale (16), dans lequel le rail d'admission (5) présente uniquement des admissions de conduit (4) conçues ouvertes vers le côté arrière de l'élément de construction, pour l'introduction de conduits (3), dans lequel le rail d'admission (5) est conçu d'une seule pièce,
**caractérisé en ce que**
au moins un élément d'armature (9) s'applique sur le côté supérieur ou le bord supérieur du rail d'admission (5).

2. Élément de construction selon la revendication 1, dans lequel l'espacement a entre l'au moins un conduit (3) et la surface avant (2) mesure 3 à 18% de l'épaisseur D de l'élément de construction, de préférence 5 à 14%, et mieux, 6 à 12%.

3. Élément de construction selon l'une des revendications 1 ou 2, dans lequel le rapport D/d*a (d : diamètre extérieur du conduit) est compris entre 0,3 et 1,7, de préférence entre 0,4 et 1,5, et mieux, entre 0,5 et 1,3.

4. Élément de construction selon l'une des revendications 1 à 3, dans lequel le rapport (A/D) entre l'espacement A entre la surface supérieure ou l'arête supérieure des rails d'admission (5) et la surface avant (2) de l'élément de construction, et l'épaisseur D de l'élément de construction est compris entre 0,1 et 0,3, de préférence entre 0,12 et 0,25, et mieux, entre 0,13 et 0,21.

5. Élément de construction selon l'une des revendications 1 à 4, dans lequel une admission de conduit (4) prévue dans un rail d'admission (5) est conçue ouverte d'un côté, pour l'introduction d'un conduit (3), et dans lequel une admission de conduit (4) est conçue pour l'admission d'un conduit (3) par complémentarité de forme.

6. Élément de construction selon l'une des revendications 1 à 5, dans lequel un rail d'admission (5) présente une section transversale en forme de U, dans lequel deux âmes transversales (16) sont agencées transversalement à l'âme de base (15), et dans lequel les admissions de conduit (4) sont prévues dans les deux âmes transversales (16).

7. Élément de construction selon l'une des revendications 1 à 6, dans lequel un rail d'admission (5) comporte une pluralité d'espaceurs (7) rattachés à l'âme de base (15) et/ou aux âmes transversales (16).

8. Élément de construction selon l'une des revendications 1 à 7, dans lequel une pluralité d'espaceurs (7) est formée en une seule pièce sur un rail d'admission (5).

9. Élément de construction selon l'une des revendications 1 à 8, dans lequel une pluralité d'espaceurs (7) est fixée à un rail d'admission (5), par des moyens d'assemblage par enclenchement, en particulier des moyens d'assemblage par enclenchement détachables.

10. Élément de construction selon l'une des revendications 1 à 9, dans lequel un espaceur (7) se rétrécit en direction de la surface avant (2) de l'élément de construction, en formant en particulier une pointe en direction de la surface avant (2).

11. Élément de construction selon l'une des revendications 1 à 10, dans lequel au moins une partie des espaceurs (7) est fixée à un rail d'admission, sous les admissions de conduit (4).

12. Élément de construction selon l'une des revendications 1 à 11, dans lequel une pluralité de percées (23) est incorporée dans un rail d'admission (5), en particulier dans l'âme de base (15) et/ou dans l'au moins une âme transversale (16) d'un rail d'admission (5), pour accueillir la masse de scellement.

13. Procédé pour la fabrication d'un élément de construction, en particulier selon l'une des revendications 1 à 12, dans lequel une pluralité de rails d'admission (5) pouvant être posés individuellement et séparément est posée sur le fond d'un coffrage (11), avec des admissions de conduit (4), de manière à ce que des espaceurs (7) fixés aux rails d'admission (5) reposent sur le fond,
dans lequel les rails d'admission (5) comportent respectivement une âme de base (15) et au moins une âme transversale (16) fixée à l'âme de base (15) et agencée transversalement à l'âme de base (15), et dans lequel une pluralité d'admissions de conduit (4) est prévue dans l'au moins une âme transversale (16), dans lequel le rail d'admission (5) est conçu d'une seule pièce,
dans lequel au moins un conduit de chauffage et/ou un conduit de refroidissement est inséré dans les admissions de conduit (4) des rails d'admission (5), dans lequel au moins un élément d'armature est agencé au-dessus des rails d'admission (5),
et dans lequel une masse de scellement est introduite dans le coffrage (11) de manière à ce que les rails d'admission (5) et l'au moins un conduit (3) soient enrobés dans la masse de scellement, au moins sur une partie de leur hauteur, dans lequel le rail d'admission (5) présente uniquement des admissions de conduit (4) conçues ouvertes vers le côté arrière de l'élément de construction, pour l'introduction de conduits (3),
**caractérisé en ce que**
au moins un élément d'armature (9) s'applique sur le côté supérieur ou le bord supérieur du rail d'admission (5).
